# EUROPÄISCHE PATENTSCHRIFT

(11) **EP 3 678 792 B1**
(45) Veröffentlichungstag und Bekanntmachung des Hinweises auf die Patenterteilung: **08.03.2023**
(21) Anmeldenummer: 18750425.3
(22) Anmeldetag: 03.08.2018
(51) Int. Cl.: B07C 5/34, B07C 5/36

(54) **VORRICHTUNG UND VERFAHREN ZUM AUSSCHLEUSEN VON IN EINER DIREKTDRUCKMASCHINE FEHLERHAFT BEDRUCKTEN BEHÄLTERN**
DEVICE AND METHOD FOR REMOVING CONTAINERS WHICH HAVE BEEN INCORRECTLY IMPRINTED IN A DIRECT PRINTING MACHINE
DISPOSITIF ET PROCÉDÉ DE REJET DES RÉCIPIENTS INCORRECTEMENT IMPRIMÉS DANS UNE PRESSE DIRECTE

(30) Priorität: 08.09.2017 DE 102017215927
(43) Veröffentlichungstag der Anmeldung: 15.07.2020
(73) Patentinhaber: Krones AG, 93073 Neutraubling (DE)
(72) Erfinder: BAUER, Veronika, 93073 Neutraubling (DE); WEIGL, Franz, 93073 Neutraubling (DE)
(74) Vertreter: Grünecker Patent- und Rechtsanwälte PartG mbB
(86) Internationale Anmeldenummer: PCT/EP2018/071176
(87) Internationale Veröffentlichungsnummer: WO 2019/048155

(56) Entgegenhaltungen:
- WO-A1-2013/178418
- WO-A1-2016/071444
- DE-A1-102009 011 058

## Beschreibung

Die Erfindung betrifft eine Vorrichtung und ein Verfahren zum Ausschleusen von in einer Direktdruckmaschine fehlerhaft bedruckten Behältern.

Es ist bekannt, Behälter zu einer Direktdruckmaschine hin und von dieser weg stehend entlang einer Transportstrecke zu transportieren, beispielsweise auf Transportbändern. Nachdem die Behälter bedruckt wurden, wird typischerweise eine automatisierte Druckbildkontrolle durchgeführt, um fehlerhaft bedruckte Behälter zu erkennen. Wenn ein fehlerhaft bedruckter Behälter erkannt wird, wird dieser automatisiert von der Transportstrecke entfernt. Beispielweise kann der Behälter einfach aus dem Behälterstrom herausgeschoben werden, beispielsweise von einem Transportband herunter in einen Ausschuss-Sammelbereich.

Die WO 2016/071444 A1 zeigt eine Vorrichtung und ein Verfahren zur Kontrolle von Direktdruckmaschinen. Die WO 2013/178481 A1 zeigt ein Verfahren zur Kontrolle eines Direktdrucks auf Behältern.

Es gibt jedoch Behälter, die Formate aufweisen, bei denen ein stehender Transport, beispielsweise auf einem Transportband, nicht ohne weiteres möglich ist, weil die Behälter nicht stabil stehen oder weil sie schlecht präzise ausgerichtet werden können. Es ist bekannt, solche Behälter in Pucks stehend zu transportieren. Dabei wird jeweils ein Behälter in einem Puck stehend transportiert. Die Pucks weisen dazu Aufnahmen auf, in denen die Behälter stehen und durch deren Wände die Behälter seitlich gestützt werden. Zum Bedrucken werden die Behälter aus den Pucks entnommen und anschließend wieder in die Pucks eingesetzt.

Hier besteht jedoch das Problem, dass das Aussortieren von Ausschuss, wie es mit frei stehenden Behältern durchgeführt wird, nicht anwendbar ist.

Der Erfindung liegt somit die Aufgabe zu Grunde, eine Vorrichtung und ein Verfahren bereitzustellen, die eine zuverlässige und effiziente Ausschuss-Ausschleusung für in Pucks transportierte Behälter ermöglichen.

Die Aufgabe wird durch den Gegenstand der unabhängigen Ansprüche gelöst.

Die Vorrichtung zum Ausschleusen von in einer Direktdruckmaschine fehlerhaft bedruckten Behältern umfasst eine Transporteinrichtung zum Transportieren von Pucks, die zum Behältertransport ausgebildet sind, entlang einer Transportstrecke von der Direktdruckmaschine weg, wobei die Transportstrecke mindestens eine Haupt-Transportstrecke und eine Neben-Transportstrecke umfasst, eine Kontrolleinrichtung zum Kontrollieren des Druckbildes auf den Behältern, eine Auskoppel-Einrichtung, insbesondere umfassend ein Pusher-System oder ein Schieber-System, zum Auskoppeln von Pucks aus der Haupt-Transportstrecke in die Neben-Transportstrecke und eine Steuereinrichtung, die zum Steuern der Auskoppel-Einrichtung derart ausgebildet ist, dass Pucks mit Behältern, bei denen die Kontrolleinrichtung ein fehlerhaftes Druckbild detektiert hat, in die Neben-Transportstrecke ausgekoppelt werden.

Der Vorteil einer solchen Vorrichtung ist, dass fehlerhaft bedruckte Behälter automatisch und zuverlässig aussortiert werden können und zwar in einer Art, die ermöglicht, die Pucks nach Entnahme der fehlerhaft bedruckten Behälter einfach wieder verwendet werden, beispielsweise der Haupt-Transportstrecke zugeführt werden.

Wenn im Folgenden die Formulierung verwendet wird, dass eine Transportstrecke zum Transportieren der Pucks ausgebildet ist, so ist gemeint, dass die Pucks entlang der Transportstrecke transportiert werden, auch wenn der Transport selbst mit Förderelementen erfolgt.

Bei den Behältern kann es sich beispielsweise um Flaschen handeln, wobei verschiedene Formate denkbar sind, beispielsweise Behälter mit einer Grundfläche, die rund, oval, länglich mit abgerundeten Enden oder vieleckig ist.

Bei den Pucks kann es sich prinzipiell um beliebig geformte Transportelemente handeln, in denen die Behälter stehend transportiert werden, wobei die Pucks derart ausgebildet sind, dass die darin stehenden Behälter seitlich gestützt und stabilisiert werden. Grundsätzlich können die Behälter auf ihrem Boden oder ihrer Oberseite stehend transportiert werden.

Die Transporteinrichtung umfasst ein oder mehrere Förderelemente, wobei jedes Förderelement im Prinzip ein beliebiges Element zum Fördern von Pucks sein kann, insbesondere ein Transportband oder eine Förderkette. Dabei können die Pucks zumindest auf Teilstrecken seitlich durch Schienen geführt werden. Dazu können die Pucks insbesondere auch Nuten in der Außenwand aufweisen, in die die Schienen eingreifen. So können die Pucks mit vorgegebener Ausrichtung stabil transportiert werden. Die Transporteinrichtung kann derart ausgebildet sein, dass sie mindestens ein Förderelement für die Neben-Transportstrecke und ein Förderelement für die Haupt-Transportstrecke umfasst, wobei die Förderelemente insbesondere unabhängig voneinander betreibbar sind.

Die Haupt-Transportstrecke kann zusätzlich zum Abtransportieren der Pucks von der Direktdruckmaschine auch zum Antransport der Pucks aus anderen Anlagenbereichen zur Direktdruckmaschine hin ausgebildet sein.

Es ist denkbar, dass mehrere Neben-Transportstrecken vorgesehen sind, beispielsweise für die zweite und dritte Wahl von Behältern.

Das Pusher-System kann ein Stoßelement (Pusher) umfassen, welches bei Auslösung in den Transportweg der Pucks hinein bewegbar ist, so dass Pucks seitlich angestoßen und somit umgelenkt werden. Das Pusher-System kann mittels der Steuereinrichtung steuerbar sein, insbesondere derart, dass das Stoßelement automatisch, gesteuert durch die Steuereinrichtung, ausgelöst wird. Das Schieber-System kann ein Schiebeelement umfassen, das mittels der Steuereinrichtung steuerbar sein kann, insbesondere derart, dass das Schiebeelement automatisch, gesteuert durch die Steuereinrichtung, ausgelöst wird. Das Schiebeelement kann derart ausgebildet sein, dass es, wenn es ausgelöst wird, einen Puck auf die Neben-Transportstrecke schiebt.

Die Steuereinrichtung kann mittels Datenverbindungen mit den durch sie anzusteuernden Elementen verbunden sein, beispielsweise kontaktlosen oder drahtgebundenen Verbindungen.

Die Auskoppel-Einrichtung kann in einem Auskoppel-Bereich angeordnet sein, wobei in dem Auskoppel-Bereich insbesondere weiterhin eine Führung und/oder mindestens eine Puck-Sperre, beispielsweise in Form eines Stoppers oder Sperrsterns, und/oder eine Weiche angeordnet sein können. Solche zusätzlichen Elemente ermöglichen ein noch zuverlässigeres Ausschleusen.

Die Führung kann beispielsweise als Stange, Schiene, oder mitlaufender Riemen ausgebildet sein. Beispielsweise kann eine Führung zum Aufteilen von Transportästen ausgebildet. Beispielsweise kann die Führung dazu V-förmig ausgebildet sein. Alternativ oder zusätzlich kann eine Führung vorgesehen sein, die derart seitlich an der Neben-Transportstrecke angeordnet ist, dass von der Haupt-Transportstrecke ausgekoppelte Pucks, insbesondere durch das Pusher-System gestoßene Pucks, nicht umfallen oder herunterfallen können.

Die Neben-Transportstrecke und optional die Haupt-Transportstrecke können zum Transportieren von Pucks in einen Entnahme-Bereich ausgebildet sein. Der Entnahme-Bereich ist dabei ein Bereich, in dem Behälter aus den Pucks entnommen werden. Der Entnahme-Bereich kann eine eigene Transportstrecke aufweisen. Alternativ kann der Entnahme-Bereich ein Bereich sein, durch den die Neben-Transportstrecke und/oder die Haupt-Transportstrecke verlaufen. Insbesondere kann der Entnahme-Bereich jeweils einen Teil der Haupt-Transportstrecke und der Neben-Transportstrecke, auf welcher in diesem Fall Pucks mit fehlerhaft bedruckten Behältern gespeichert werden können, umfassen.

Die Vorrichtung kann eine Entnahme-Einrichtung zum maschinellen Entnehmen der Behälter aus den Pucks in den Entnahme-Bereich umfassen. Insbesondere können sowohl die Neben-Transportstrecke als auch die Haupt-Transportstrecke zum Transportieren von Pucks in einen gemeinsamen Entnahme-Bereich ausgebildet sein. Dies hat den Vorteil, dass die Vorrichtung platzsparend ist. Gegebenenfalls kann in diesem Fall nur eine gemeinsame Entnahme-Einrichtung vorgesehen sein.

Die Haupt-Transportstrecke kann zum Transportieren von Pucks in den Entnahme-Bereich ausgebildet ist und die Vorrichtung kann eine erste Umlenkeinrichtung umfassen, die derart ausgebildet ist, dass damit einstellbar ist, ob Pucks aus der Haupt-Transportstrecke oder aus der Neben-Transportstrecke in den Entnahme-Bereich transportiert werden.

Das heißt, in diesem Fall sind sowohl die Neben-Transportstrecke als auch die Haupt-Transportstrecke zum Transportieren von Pucks in einen gemeinsamen Entnahme-Bereich ausgebildet und es ist möglich, mit der Umlenkeinrichtung automatisch einzustellen, ob im Entnahme-Bereich Pucks mit korrekt bedruckten Behältern oder Pucks mit Behältern mit fehlerhaftem Druckbild antransportiert werden. So können, obwohl nur ein gemeinsamer Entnahme-Bereich vorliegt, zuverlässig und einfach Ausschussbehälter ausgesondert werden.

Die Steuereinrichtung kann zum Steuern der ersten Umlenkeinrichtung derart ausgebildet sein, dass in einem vorgegebenen Zeitraum jeweils nur Pucks aus der Haupt-Transportstrecke oder nur Pucks aus der Neben-Transportstrecke in den Entnahme-Bereich gelangen.

Dies ermöglicht, dass automatisch die Ausschussbehälter ausgesondert werden und nicht versehentlich auch fehlerfreie Behälter und dass zuverlässig alle (erkannten) Ausschussbehälter ausgesondert werden, da in dem Zeitraum nur fehlerfreie oder nur fehlerhafte Behälter in den Entnahme-Bereich gelangen. Dass der Zeitraum vorgegeben ist, muss nicht notwendig bedeuten, dass im Voraus ein fester Wert für den Zeitraum festgelegt ist. Der Zeitraum ist derart vorgegeben, dass im Betrieb in dem Entnahme-Bereich nicht gleichzeitig Behälter aus der Haupt-Transportstrecke und aus der Neben-Transportstrecke vorhanden sind. Der Zeitraum kann sich beispielsweise daraus ergeben, wie viele Pucks bereits ausgekoppelt wurden, beispielsweise daraus, dass in der Neben-Transportstrecke kein Platz mehr für weitere Pucks ist, und diese Pucks in den Entnahme-Bereich transportiert und dort entleert werden. Während dies der Fall ist, kann der Antransport von Pucks aus der Haupt-Transportstrecke in den Entnahme-Bereich unterbrochen werden.

Die Neben-Transportstrecke kann zum Transportieren der Pucks zu einer Einkoppel-Einrichtung hin ausgebildet sein, wobei die Einkoppel-Einrichtung zum Einkoppeln von Pucks in die Haupt-Transportstrecke, insbesondere in Transportrichtung vor einem Einlauf der Direktdruckmaschine, ausgebildet ist.

Dies hat den Vorteil, dass nach Entnahme der fehlerhaft bedruckten Behälter, die Pucks sehr einfach weiter verwendet werden können. Im Fall der Zuführung vor der Direktdruckmaschine kann dies beispielsweise dann erfolgen, wenn leere Pucks in der Haupt-Transportstrecke benötigt werden. Dies kann beispielsweise beim Leerfahren der Direktdruckmaschine der Fall sein, wenn für die letzten Behälter in der Direktdruckmaschine, je nach Konfiguration der Transportvorrichtung, leere Pucks nachgesteuert werden müssen.

Die Vorrichtung kann eine zweite Umlenkeinrichtung umfassen, die derart ausgebildet ist, dass einstellbar ist, ob Pucks aus dem Entnahme-Bereich zu der Einkoppel-Einrichtung oder zu einem anderen Anlagenbereich transportiert werden.

So können die leeren Pucks variabel weiterverwendet werden. Insbesondere kann es sinnvoll sein, nur eine bestimmte Anzahl an Pucks für das Einkoppeln vor der Direktdruckmaschine zu behalten und die übrigen Pucks in andere Anlagenbereiche abzutransportieren.

Die erste und/oder die zweite Umlenkeinrichtung können jeweils mindestens eine Weiche und/oder mindestens eine Führung und/oder mindestens eine Puck-Sperre, beispielsweise in Form eines Stoppers oder Sperrsterns, umfassen.

Die Weichen oder Führungen können dabei den Puckstrom leiten. Mittels der Puck-Sperre kann ein Puck-Zufluss effizient und zeitlich präzise gestoppt und begonnen werden. Eine Weiche hat den Vorteil, dass sie zugleich die Pucks von einem Transportast führen und vom anderen Transportast stoppen kann.

Die Auskoppel-Einrichtung kann ein bzw. das Pusher-System umfassen, wobei das Pusher-System zum Stoßen der Pucks von einem Transportband der Haupt-Transportstrecke auf ein Transportband der Neben-Transportstrecke ausgebildet ist.

Das Transportband der Haupt-Transportstrecke wird im Folgenden als erstes Transportband bezeichnet und das der Neben-Transportstrecke als zweites Transportband. Die Transportbänder sind dabei jeweils Förderelemente der Transporteinrichtung.

Das erste Transportband und das zweite Transportband können in dem Auskoppel-Bereich parallel, insbesondere unmittelbar aneinander angrenzend, verlaufen. Mit "unmittelbar aneinander angrenzend" ist in dieser Anmeldung gemeint, dass benachbarte Transportbänder in so geringem Abstand angeordnet sind, dass ein Puck von einem auf das andere Transportband laufen kann.

Zwischen dem ersten Transportband und dem zweiten Transportband können noch ein oder mehrere weitere Transportbänder, ebenfalls parallel und an die benachbarten Transportbänder unmittelbar angrenzend verlaufen. Diese Anordnung ist vorteilhaft, um im Betrieb eine etwaige Differenz der Transportgeschwindigkeit der Pucks entlang der Haupt-Transportstrecke und der Neben-Transportstrecke zu überbrücken.

Die Erfindung betrifft auch ein Verfahren zum Ausschleusen von in einer Direktdruckmaschine fehlerhaft bedruckten Behältern.

Das Verfahren umfasst Transportieren von Pucks, die zum Behältertransport ausgebildet sind und in denen bedruckte Behälter stehen, entlang einer Transportstrecke von einer Direktdruckmaschine weg, wobei die Transportstrecke eine Haupt-Transportstrecke und eine Neben-Transportstrecke umfasst, Kontrollieren eines Druckbildes auf den Behältern und Auskoppeln von Pucks mit Behältern, bei denen ein fehlerhaftes Druckbild detektiert wurde, aus der Haupt-Transportstrecke in die Neben-Transportstrecke.

Das Verfahren kann ein Zuführen von Pucks aus der Neben-Transportstrecke und optional aus der Haupt-Transportstrecke in einen Entnahme-Bereich umfassen. Insbesondere kann das Verfahren ein manuelles und/oder maschinelles Entnehmen von Behältern aus den Pucks in dem Entnahme-Bereich umfassen.

Das Verfahren kann umfassen, dass in einem vorgegebenen Zeitraum jeweils nur Pucks aus der Haupt-Transportstrecke oder aus der Neben-Transportstrecke dem Entnahme-Bereich zugeführt werden.

Das Verfahren kann umfassen, dass Pucks mit Behältern mit fehlerfreiem Druckbild dem Entnahme-Bereich zugeführt werden und die Pucks mit Behältern mit fehlerhaftem Druckbild in der Neben-Transportstrecke so lange gespeichert werden, bis keine Pucks mehr in der Neben-Transportstrecke Platz haben, und anschließend die gespeicherten Pucks in den Entnahme-Bereich transportiert werden, jedoch keine Pucks aus der Haupt-Transportstrecke. Die Neben-Transportstrecke kann optional Speicher-Bereiche aufweisen, in denen die Pucks angestaut werden können.

Dies hat den Vorteil, dass der geteilte Entnahme-Bereich besonders effizient genutzt wird.

Das Verfahren kann umfassen, dass leere Pucks aus dem Entnahme-Bereich in einem Einkoppel-Bereich, insbesondere in Transportrichtung vor der Direktdruckmaschine, in die Haupt-Transportstrecke eingekoppelt werden.

Die oben beschriebenen Verfahren können jeweils mittels einer der oben beschriebenen Vorrichtungen durchgeführt werden.

Die Erfindung betrifft auch die Verwendung einer der oben beschriebenen Vorrichtungen für eines der oben beschriebenen Verfahren.

Es versteht sich, dass die im Zusammenhang mit der Vorrichtung genannten Merkmale und Vorteile ebenso auf das Verfahren und die Verwendung anwendbar sind.

Weitere Merkmale und Vorteile werden nachfolgend anhand der beispielhaften Figuren erläutert. Dabei zeigen:
- Figur 1: eine schematische, nicht-maßstabsgetreue Draufsicht auf eine erste Vorrichtung zum Ausschleusen von in einer Direktdruckmaschine fehlerhaft bedruckten Behältern und
- Figur 2: eine schematische, nicht-maßstabsgetreue Draufsicht auf eine zweite Vorrichtung zum Ausschleusen von in einer Direktdruckmaschine fehlerhaft bedruckten Behältern.

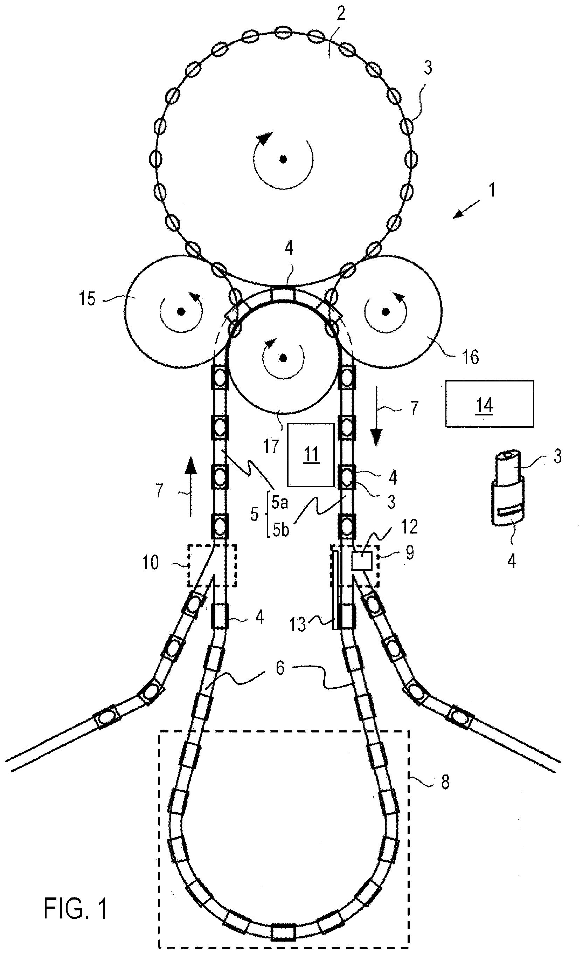

Figur 1 zeigt eine erste Vorrichtung 1 zum Ausschleusen von in einer Direktdruckmaschine 2 fehlerhaft bedruckten Behältern 3. Die Behälter werden dabei in Pucks 4 entlang einer Transportstrecke transportiert, die eine Haupt-Transportstrecke 5 und eine Neben-Transportstrecke 6 umfasst. In diesem Beispiel hat die Haupt-Transportstrecke einen ersten Teil 5a und einen zweiten Teil 5b. Entlang des ersten Teils werden im Betrieb Pucks mit zu bedruckenden Behältern zu der Direktdruckmaschine hin transportiert und entlang des zweiten Teils werden im Betrieb Pucks von der Direktdruckmaschine weg transportiert. Die Transportrichtung ist mit dem Pfeil 7 angedeutet. Die Pucks werden hier beispielhaft mit Förderelementen in Form von Transportbändern gefördert. Alternativ oder zusätzlich können auch andere Arten von Förderelementen vorgesehen sein.

In der Figur 1 ist weiterhin ein Bereich 8 gezeigt, der den Entnahme-Bereich darstellt, in welchem Behälter aus den Pucks entnommen werden können. In der hier gezeigten Figur umfasst der Entnahme-Bereich einen Teil der Neben-Transportstrecke. Alternativ kann der Entnahme-Bereich aber auch jeweils einen Teil der Haupt-Transportstrecke und der Neben-Transportstrecke, auf welcher in diesem Fall fehlerhaft bedruckte Behälter gespeichert werden können, umfassen. In diesem Fall könnte ein Roboter, beispielsweise ein PortalRoboter oder Knickarmroboter aus den Pucks in dem Teil der Haupt-Transportstrecke im Entnahme-Bereich die fehlerfreien Behälter entnehmen während auf der Neben-Transportstrecke Pucks mit fehlerhaft bedruckten Behältern gesammelt werden. Dieser Roboter kann ebenfalls, wenn Zeit ist, Behälter aus Pucks in dem Teil der Neben-Transportstrecke im Entnahme-Bereich entnehmen und beispielsweise in einen Entsorgungsbereich transportieren.

Weiterhin sind auslaufseitig ein Bereich 9 und einlaufseitig ein Bereich 10 dargestellt. Der Bereich 9 wird als Auskoppel-Bereich bezeichnet, da hier Pucks aus der Haupt-Transportstrecke (aus dem zweiten Teil 5b) in die Neben-Transportstrecke ausgekoppelt werden können. Der Bereich 10 wird im Folgenden auch als Einkoppel-Bereich bezeichnet, da hier Pucks aus der Neben-Transportstrecke in die Haupt-Transportstrecke (in den ersten Teil 5a) eingekoppelt werden können. Dieser Bereich ist jedoch optional vorgesehen. Die Pucks können auch in andere Bereiche der Anlage transportiert werden oder einfach in dem Entnahme-Bereich verbleiben.

Weiterhin zeigt die Figur 1 eine Kontrolleinrichtung 11 zum Kontrollieren des Druckbildes auf den Behältern. Die Kontrolleinrichtung kann beispielsweise mindestens ein Kamerasystem umfassen, insbesondere zwei Kamerasysteme, was ermöglicht, Vorder- und Rückseite zu kontrollieren ohne den Behälter zu drehen. Die Kontrolleinrichtung kann auch einen Drehteller und/oder ein Stellelement umfassen, um den Behälter für die Kontrolle geeignet auszurichten und gegebenenfalls nachzusteuern. Die Kontrolleinrichtung kann jedoch auch beliebig anders ausgebildet sein, solange ein fehlerhaft bedruckter Behälter damit identifizierbar ist.

In Figur 1 ist außerdem schematisch eine Auskoppel-Einrichtung 12 zum Auskoppeln von Pucks aus der Haupt-Transportstrecke in die Neben-Transportstrecke im Auskoppel-Bereich gezeigt. Diese umfasst in diesem Beispiel ein Pusher-System. Das Pusher-System ist so ausgebildet, dass es Pucks im Auskoppel-Bereich jeweils einen Impuls bzw. Stoß gibt, der die Pucks auf das Transportband der Neben-Transportstrecke stößt. Dies kann mit einem Pusher (Stoßelement) erfolgen. Alternativ zu einem Pusher-System kann auch ein Schieber-System mit einem Schiebeelement vorgesehen sein. Optional kann eine Begrenzung 13 vorgesehen sein, beispielsweise eine Führung oder ein Geländer, die verhindert, dass der Puck von dem Transportband in der Neben-Transportstrecke herabfällt. Auch andere und/oder zusätzliche Führungen, die den Puck-Strom lenken und stützen, sind möglich.

Es sei angemerkt, dass hier zwar eine Variante beschrieben wurde, in der im Auskoppel-Bereich zwei Transportbänder vorgesehen sind, jedoch können hier durchaus auch mehr Transportbänder vorgesehen sein, insbesondere drei oder vier, wobei das bzw. die zusätzlichen Transportbänder zwischen dem ersten Transportband und dem zweiten Transportband angeordnet sind. Dies hat den Vorteil, dass die zusätzlichen Transportbänder gegebenenfalls eine Geschwindigkeitsdifferenz zwischen dem ersten und zweiten Transportband überbrücken können.

Außerdem zeigt Figur 1 schematisch eine Steuereinrichtung 14, die zum Steuern der Auskoppel-Einrichtung derart ausgebildet ist, dass Pucks mit Behältern, bei denen die Kontrolleinrichtung ein fehlerhaftes Druckbild detektiert hat, in die Neben-Transportstrecke ausgekoppelt werden. Insbesondere kann die Steuereinrichtung derart ausgebildet sein, dass sie steuert, wann der Pusher ausgelöst wird, um einen Puck auszukoppeln.

Die Steuereinrichtung kann dazu eine Datenverbindung mit der Kontrolleinrichtung und der Auskoppel-Einrichtung aufweisen, so dass basierend auf Daten von der Kontrolleinrichtung die Auskoppel-Einrichtung angesteuert werden kann. Beispielsweise kann die Steuereinrichtung derart ausgebildet sein, dass sie von der Kontrolleinrichtung Signale empfängt, die signalisieren, dass ein Puck mit einem fehlerhaft bedruckten Behälter detektiert wurde. Basierend auf den Signalen kann dann die Auskoppel-Einrichtung angesteuert werden, insbesondere der Pusher ausgelöst werden, um den Puck auszukoppeln. Es ist auch denkbar, dass die Steuereinrichtung nicht-verarbeitete oder nur teilweise verarbeitete Daten von der Kontrolleinrichtung erhält und basierend darauf selbst bestimmt, dass ein Behälter fehlerhaft bedruckt wurde. Alternativ kann dies auch durch eine separate Recheneinrichtung durchgeführt werden, die mit der Kontrolleinrichtung und der Steuereinrichtung über eine Datenverbindung verbunden ist.

Im Einkoppel-Bereich können (hier jedoch nicht im Detail gezeigt) Weichen und/oder Schienen und/oder Stopper vorgesehen sein, die insbesondere mittels der Steuereinrichtung derart einstellbar sein können, dass entweder Pucks, die aus anderen Anlagenteilen entlang der Haupt-Transportstrecke transportiert werden, durchgelassen werden oder Pucks aus der Neben-Transportstrecke eingekoppelt werden. Dabei kann insbesondere der Puck-Fluss von Pucks aus anderen Anlagenteilen mittels der entsprechend gesteuerten Weichen bzw. Schienen bzw. Stopper während des Einkoppelns unterbrochen werden.

Beispielhaft sind in der Figur auch ein Einlaufstern 15, ein Auslaufstern 16 und ein Zwischenstern 17 gezeigt. Der Zwischenstern ist vorzugsweise in Form eines Hebesterns ausgebildet, welcher die Behälter greift, aus den Pucks hebt, an den Einlaufstern übergibt und anschließend Behälter von dem Auslaufstern übernimmt und diese wieder in einen Puck einsetzt. Der Einlaufstern und die Direktdruckmaschine sind derart angeordnet und ausgebildet, dass der Einlaufstern Behälter an die Direktdruckmaschine übergibt, in welcher die Behälter transportiert und bedruckt werden, beispielsweise bedruckt. Der Auslaufstern ist derart ausgebildet und angeordnet, dass er Behälter, nachdem sie die Direktdruckmaschine durchlaufen haben, von der Direktdruckmaschine übernimmt und an den Hebestern übergibt, welche die Behälter dann in die Pucks einsetzt. Allerdings ist diese Gestaltung der Direktdruckmaschine sowie ihres Einlaufs und Auslaufs rein beispielhaft. Die Erfindung kann auch für anderweitig ausgebildete Direktdruckmaschinen analog verwendet werden.

Weiterhin zeigt die Figur 1 beispielhaft einen Puck mit einem Behälter in Schrägansicht. Der Puck weist beispielhaft Nuten auf. Wenn solche Nuten vorgesehen sind, kann der Puck zumindest zeitweise durch Schienen geführt werden, die in die Nuten eingreifen. Dies ist jedoch nicht zwingend erforderlich.

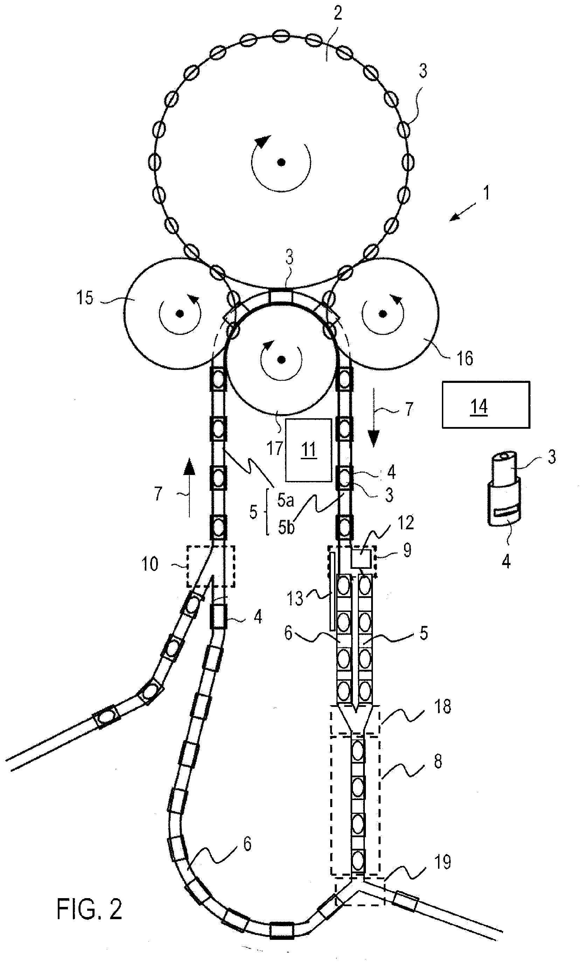

In Figur 2 ist eine zweite Ausführungsform einer Vorrichtung zum Ausschleusen von in einer Direktdruckmaschine fehlerhaft bedruckten Behältern gezeigt. Gleiche oder ähnliche Elemente sind mit gleichen Bezugszeichen wie in Figur 1 beschriftet und werden auch nicht noch einmal beschrieben.

In der in Figur 2 gezeigten Ausführungsform sind die Haupt-Transportstrecke, die Neben-Transportstrecke, sowie der Entnahme-Bereich 8 so angeordnet und ausgebildet, dass Pucks von der Haupt-Transportstrecke und von der Neben-Transportstrecke grundsätzlich in diesen gemeinsamen Entnahme-Bereich transportiert werden können.

In Figur 2 ist ein Zusammenführ-Bereich 18 gezeigt, in dem die Haupt-Transportstrecke und die Neben-Transportstrecke in den Entnahme-Bereich zusammengeführt werden.

Der Zusammenführ-Bereich umfasst eine erste Umlenkeinrichtung, die derart ausgebildet ist, dass einstellbar ist, ob Pucks aus der Haupt-Transportstrecke oder aus der Neben-Transportstrecke in den Entnahme-Bereich transportiert werden. Die erste Umlenkeinrichtung kann ein oder mehrere Elemente umfassen, beispielsweise eine Weiche und/oder mindestens eine Führung und/oder mindestens eine Puck-Sperre, beispielsweise in Form eines Stoppers oder Sperrsterns, die hier jedoch nicht im Detail gezeigt sind.

Auf der anderen Seite des Entnahme-Bereiches kann optional noch eine zweite Umlenkeinrichtung in einem Bereich 19 vorgesehen sein, die derart ausgebildet ist, dass einstellbar ist, ob Pucks aus dem Entnahme-Bereich zu der Einkoppel-Einrichtung oder zu einem anderen Anlagenbereich transportiert werden. Auf eine solche Aufteilung und die entsprechende Umlenkeinrichtung kann jedoch auch verzichtet werden.

Auch die Elemente der ersten und zweiten Umlenkeinrichtung können jeweils mittels der Steuereinrichtung steuerbar sein. Insbesondere können die Elemente der ersten Umlenkeinrichtung, also im Zusammenführ-Bereich, derart ansteuerbar sein, dass in einem vorgegebenen Zeitraum nur Pucks aus der Haupt-Transportstrecke oder aus der Neben-Transportstrecke in den Entnahme-Bereich transportiert werden.

Im Folgenden wird nun ein Verfahren zum Ausschleusen von in einer Direktdruckmaschine fehlerhaft bedruckten Behältern beschrieben, das beispielsweise mit den oben beschriebenen Vorrichtungen oder vergleichbaren Vorrichtungen durchgeführt werden kann.

Vor dem Verfahren zum Ausschleusen der Behälter werden Behälter in Pucks stehend in Richtung Direktdruckmaschine entlang der Transportrichtung transportiert. Im Einlauf der Direktdruckmaschine werden die Behälter aus den Pucks entnommen und an die Direktdruckmaschine übergeben. In der Direktdruckmaschine werden die Behälter bedruckt. Nach dem Durchlaufen der Direktdruckmaschine werden die Behälter wieder in Pucks eingesetzt.

Das Verfahren zum Ausschleusen umfasst, dass die Pucks mit den bedruckten Behältern entlang der Haupt-Transportstrecke von der Direktdruckmaschine abtransportiert werden und das Druckbild auf den Behältern kontrolliert wird, beispielsweise mittels einer der oben beschriebenen Kontrolleinrichtungen.

Wenn Behälter mit einem fehlerhaften Druckbild detektiert werden, werden die Pucks mit diesen Behältern aus der Haupt-Transportstrecke in eine Neben-Transportstrecke ausgekoppelt.

Die Pucks von der Neben-Transportstrecke werden in einen Entnahme-Bereich transportiert und dort werden die fehlerhaften Behälter maschinell oder manuell entnommen. Sie können dann gesondert von den fehlerfreien Behältern gesammelt werden.

Die so entleerten Pucks können dann optional der Haupt-Transportstrecke wieder zugeführt werden, indem sie an geeigneter Stelle und zu einem geeigneten Zeitpunkt wieder in die Haupt-Transportstrecke eingekoppelt werden.

Wenn der Entnahme-Bereich ein gemeinsamer Entnahme-Bereich ist, dem sowohl Pucks aus der Neben-Transportstrecke als auch aus der Haupt-Transportstrecke zugeführt werden, so können die Pucks mit fehlerfrei bedruckten Behältern in den Entnahme-Bereich transportiert werden und die Behälter entnommen und gegebenenfalls verpackt oder weiterverarbeitet werden. Die Pucks mit fehlerhaft bedruckten Behältern können in dieser Zeit in der Neben-Transportstrecke, die auch einen Sammelbereich umfassen kann, gesammelt werden, beispielsweise bis dort kein Platz mehr ist oder bis die Charge zu Ende ist. Dann kann der Transport von Pucks mit fehlerfrei bedruckten Behältern aus der Haupt-Transportstrecke in den Entnahme-Bereich unterbrochen werden und die Pucks mit fehlerhaft bedruckten Behältern aus der Neben-Transportstrecke können in den Entnahme-Bereich transportiert werden. Nachdem alle fehlerhaft bedruckten Behälter entnommen wurden, können die leeren Pucks abtransportiert werden, und es können erneut Pucks aus der Haupt-Transportstrecke in den Entnahme-Bereich gelangen.

Das Auskoppeln der Pucks kann mit einem Pusher-System, beispielsweise dem oben beschriebenen Pusher-System durchgeführt werden, wobei mit dem Pusher-System ein Puck von einem Transportband der Haupt-Transportstrecke auf ein Transportband der Neben-Transportstrecke gestoßen wird, oder mit einem Schieber-System durchgeführt werden.

Sofern ein Einkoppel-Bereich vorgesehen ist können optional, beispielsweise am Ende einer Charge von Behältern, leere Pucks vor der Direktdruckmaschine aus der Neben-Transportstrecke in die Haupt-Transportstrecke eingekoppelt werden, derart, dass die letzten Behälter der Charge nach dem Durchlaufen der Direktdruckmaschine in die aus der Neben-Transportstrecke eingekoppelten Pucks eingesetzt werden.

Es versteht sich, dass in den zuvor beschriebenen Ausführungsbeispielen genannte Merkmale nicht auf diese speziellen Kombinationen beschränkt sind und auch in anderen Kombinationen möglich sind, die unter die Ansprüche fallen.

## Patentansprüche

1. Vorrichtung (1) zum Ausschleusen von in einer Direktdruckmaschine (2) fehlerhaft bedruckten Behältern (3),
**gekennzeichnet durch**
eine Transporteinrichtung zum Transportieren von Pucks (4), die zum Behältertransport ausgebildet sind, entlang einer Transportstrecke von der Direktdruckmaschine (2) weg, wobei die Transportstrecke mindestens eine Haupt-Transportstrecke (5) und eine Neben-Transportstrecke (6) umfasst,
eine Kontrolleinrichtung zum Kontrollieren des Druckbildes auf den Behältern (3),
eine Auskoppel-Einrichtung (12), insbesondere umfassend ein Pusher-System oder ein Schieber-System, zum Auskoppeln von Pucks (4) aus der Haupt-Transportstrecke (5) in die Neben-Transportstrecke (6) und
eine Steuereinrichtung (14), die zum Steuern der Auskoppel-Einrichtung (12) derart ausgebildet ist, dass Pucks (4) mit Behältern (3), bei denen die Kontrolleinrichtung ein fehlerhaftes Druckbild detektiert hat, in die Neben-Transportstrecke (6) ausgekoppelt werden.

2. Vorrichtung (1) nach Anspruch 1, wobei die Auskoppel-Einrichtung (12) in einem Auskoppel-Bereich (9) angeordnet ist, wobei in dem Auskoppel-Bereich (9) weiterhin eine Führung (13) und/oder mindestens eine Puck-Sperre, beispielsweise in Form eines Stoppers oder Sperrsterns, und/oder eine Weiche angeordnet sind.

3. Vorrichtung (1) nach Anspruch 1 oder 2, wobei die Neben-Transportstrecke (6) und optional die Haupt-Transportstrecke (5) zum Transportieren von Pucks (4) in den bzw. einen Entnahme-Bereich (8) ausgebildet sind.

4. Vorrichtung (1) nach Anspruch 3, wobei die Haupt-Transportstrecke (5) zum Transportieren von Pucks (4) in den Entnahme-Bereich (8) ausgebildet ist und wobei die Vorrichtung (1) eine erste Umlenkeinrichtung umfasst, die derart ausgebildet ist, dass damit einstellbar ist, ob Pucks (4) aus der Haupt-Transportstrecke (5) oder aus der Neben-Transportstrecke (6) in den Entnahme-Bereich (8) transportiert werden.

5. Vorrichtung (1) nach Anspruch 4, wobei die Steuereinrichtung (14) zum Steuern der ersten Umlenkeinrichtung derart ausgebildet ist, dass in einem vorgegebenen Zeitraum jeweils nur Pucks (4) aus der Haupt-Transportstrecke (5) oder nur Pucks (4) aus der Neben-Transportstrecke (6) in den Entnahme-Bereich (8) gelangen.

6. Vorrichtung (1) nach einem der vorangegangen Ansprüche, wobei die Neben-Transportstrecke (6) zum Transportieren der Pucks (4) zu einer Einkoppel-Einrichtung hin ausgebildet ist, wobei die Einkoppel-Einrichtung zum Einkoppeln von Pucks (4) in die Haupt-Transportstrecke (5), insbesondere in Transportrichtung (7) vor einem Einlauf der Direktdruckmaschine (2), ausgebildet ist.

7. Vorrichtung (1) nach einem der vorangegangen Ansprüche, wobei die Vorrichtung (1) eine zweite Umlenkeinrichtung umfasst, die derart ausgebildet ist, dass einstellbar ist, ob Pucks (4) aus einem bzw. dem Entnahme-Bereich (8) zu einer bzw. der Einkoppel-Einrichtung oder zu einem anderen Anlagenbereich transportiert werden.

8. Vorrichtung (1) nach einem der Ansprüche 4 bis 7, wobei die erste und/oder die zweite Umlenkeinrichtung jeweils mindestens eine Weiche und/oder mindestens eine Führung und/oder mindestens eine Puck-Sperre, beispielsweise in Form eines Stoppers oder Sperrsterns, umfassen.

9. Vorrichtung (1) nach einem der vorangegangenen Ansprüche, wobei die Auskoppel-Einrichtung (12) das Pusher-System umfasst, wobei das Pusher-System zum Stoßen der Pucks (4) von einem Transportband der Haupt-Transportstrecke (5) auf ein Transportband der Neben-Transportstrecke (6) ausgebildet ist.

10. Verfahren zum Ausschleusen von in einer Direktdruckmaschine (2) fehlerhaft bedruckten Behältern (3),
**gekennzeichnet durch**
Transportieren von Pucks (4), die zum Behältertransport ausgebildet sind und in denen bedruckte Behälter stehen, entlang einer Transportstrecke von der Direktdruckmaschine (2) weg, wobei die Transportstrecke mindestens eine Haupt-Transportstrecke (5) und eine Neben-Transportstrecke (6) umfasst,
Kontrollieren des Druckbildes auf den Behältern (3) und
Auskoppeln von Pucks (4) mit Behältern (3), bei denen ein fehlerhaftes Druckbild detektiert wurde, aus der Haupt-Transportstrecke (5) in die Neben-Transportstrecke (6).

11. Verfahren nach Anspruch 10, umfassend ein Zuführen von Pucks (4) aus der Neben-Transportstrecke (6) und optional aus der Haupt-Transportstrecke (5) in einen Entnahme-Bereich (8) und insbesondere ein manuelles und/oder maschinelles Entnehmen von Behältern (3) aus den Pucks (4) in dem Entnahme-Bereich (8).

12. Verfahren nach Anspruch 11, wobei in einem vorgegebenen Zeitraum jeweils nur Pucks (4) aus der Haupt-Transportstrecke (5) oder aus der Neben-Transportstrecke (6) dem Entnahme-Bereich (8) zugeführt werden.

13. Verfahren nach Anspruch 11 oder 12, wobei (4) mit Behältern (3) mit fehlerfreiem Druckbild dem Entnahme-Bereich (8) zugeführt werden und Pucks (4) mit Behältern (3) mit fehlerhaftem Druckbild in der Neben-Transportstrecke (6) so lange gespeichert werden, bis keine Pucks (4) mehr in der Neben-Transportstrecke (6) Platz haben, und anschließend die gespeicherten Pucks (4) in den Entnahme-Bereich (8) transportiert werden, jedoch keine Pucks (4) aus der Haupt-Transportstrecke (5).

14. Verfahren nach Anspruch 11 bis 13, wobei leere Pucks (4) aus dem Entnahme-Bereich (8) in einem Einkoppel-Bereich, insbesondere in Transportrichtung (7) vor der Direktdruckmaschine (2), in die Haupt-Transportstrecke (5) eingekoppelt werden.

15. Verwendung einer der Vorrichtungen (1) nach Ansprüchen 1 bis 9 für eines der Verfahren nach Ansprüchen 10 bis 14.

## Claims

1. Device (1) for sorting out containers (3) which were applied an incorrect print by a direct printing machine (2),
**characterized by**
a transport device for transporting pucks (4), which are adapted to transport containers, along a transport path away from the direct printing machine (2), wherein the transport path comprises at least a primary transport path (5) and a secondary transport path (6),
an inspection device for inspecting the print on the containers (3),
a decoupling device (12), in particular comprising a pusher system or a slider system, for decoupling pucks (4) from the primary transport path (5) to the secondary transport path (6), and
a control device (14) adapted to control the decoupling device (12) such that pucks (4) with containers (3) for which the inspection device has detected an incorrect print are decoupled to the secondary transport path (6).

2. Device (1) according to claim 1, wherein the decoupling device (12) is arranged in a decoupling section (9), wherein a guide (13) and/or at least one puck lock, for example in the form of a stopper or locking star, and/or a switch, are further arranged in the decoupling section (9).

3. Device (1) according to claim 1 or 2, wherein the secondary transport path (6) and optionally the primary transport path (5) are adapted to transport pucks (4) to the or a removal section (8).

4. Device (1) according to claim 3, wherein the primary transport path (5) is adapted to transport pucks (4) to the removal section (8) and wherein the device (1) comprises a first deflection device, which is configured such that whether pucks (4) are transported from the primary transport path (5) or from the secondary transport path (6) into the removal section (8) is adjustable by means of the first deflection device.

5. Device (1) according to claim 4, wherein the control device (14) is adapted to control the first deflection device such that only pucks (4) from the primary transport path (5) or only pucks (4) from the secondary transport path (6) enter the removal section (8) in a predetermined period of time.

6. Device (1) according to one of the preceding claims, wherein the secondary transport path (6) is adapted to transport the pucks (4) to a merging device, wherein the merging device is adapted to merge pucks (4) into the primary transport path (5), in particular in the direction of transport (7) upstream of the inlet of the direct printing machine (2).

7. Device (1) according to one of the preceding claims, wherein the device (1) comprises a second deflection device which is adapted such that it is adjustable whether pucks (4) are transported from a or the removal section (8) to a or the merging device or to another system region.

8. Device (1) according to one of the claims 4 to 7, wherein the first and/or the second deflection device each comprise at least a switch and/or at least a guide and/or at least a puck lock, for example, in the form of a stopper or a locking star.

9. Device (1) according to one of the preceding claims, wherein the decoupling device (12) comprises the pusher system, wherein the pusher system is adapted to push the pucks (4) from a conveyor belt of the primary transport path (5) onto a conveyor belt of the secondary transport path (6).

10. Method for sorting out containers (3) which were applied an incorrect print by a direct printing machine (2),
**characterized by**
transporting pucks (4), which are adapted to transport containers and in which containers which were applied a print are standing, along a transport path away from the direct printing machine (2), wherein the transport path comprises at least a primary transport path (5) and a secondary transport path (6),
inspecting the print on the containers (3), and
decoupling pucks (4) with containers (3), for which it was detected that they were applied an incorrect print, from the primary transport path (5) to the secondary transport path (6).

11. Method according to claim 10, comprising a supply of pucks (4) from the secondary transport path (6) and optionally from the primary transport path (5) to a removal section (8) and in particular removing containers (3) from the pucks (4) manually and/or by machine in the removal section (8).

12. Method according to claim 11, wherein only pucks (4) from the primary transport path (5) or from the secondary transport path (6) are supplied to the removal section (8) in a predetermined period of time.

13. Method according to claim 11 or 12, wherein (4) with containers (3) which were applied a correct print are supplied to the removal section (8) and pucks (4) with containers (3) which were applied an incorrect print are stored in the secondary transport path (6) until there is no more room for pucks (4) in the secondary transport path (6), and subsequently the stored pucks (4), but no pucks (4) from the primary transport path (5), are transported to the removal section (8).

14. Method according to claims 11 to 13, wherein empty pucks (4) from the removal section (8) are merged in a merging section into the primary transport path (5), in particular in the direction of transport (7) upstream of the direct printing machine (2).

15. Use of one of the devices (1) according to claims 1 to 9 for one of the methods according to claims 10 to 14.

## Revendications

1. Dispositif (1) d'exclusion de récipients (3) imprimés de manière défectueuse dans une machine d'impression directe (2),
**caractérisé par**
un dispositif de transport permettant le transport de palettes (4), conçues pour le transport de récipients, le long d'une voie de transport les éloignant de la machine d'impression directe (2), dans lequel la voie de transport comprend au moins une voie de transport principale (5) et une voie de transport secondaire (6),
un dispositif de vérification permettant de vérifier l'image imprimée sur les récipients (3),
un dispositif de découplage (12), en particulier comprenant un système à poussoir ou un système à coulisseau, permettant de découpler les palettes (4) de la voie de transport principale (5) vers la voie de transport secondaire (6) et
un dispositif de commande (14) conçu pour commander le dispositif de découplage (12) de telle manière que des palettes (4) munies de récipients (3) pour lesquels le dispositif de vérification a détecté une image imprimée défectueuse sont découplées vers la voie de transport secondaire (6).

2. Dispositif (1) selon la revendication 1, dans lequel le dispositif de découplage (12) est agencé dans une zone de découplage (9), dans lequel un guidage (13) et/ou au moins un verrouillage de palette, par exemple sous la forme d'une butée ou d'une étoile de verrouillage, et/ou un aiguillage est/sont en outre agencé(s) dans la zone de découplage (9).

3. Dispositif (1) selon la revendication 1 ou 2, dans lequel la voie de transport secondaire (6) et éventuellement la voie de transport principale (5) sont conçues pour le transport de palettes (4) dans la ou une zone de prélèvement (8).

4. Dispositif (1) selon la revendication 3, dans lequel la voie de transport principale (5) est conçue pour le transport de palettes (4) dans la zone de prélèvement (8) et dans lequel le dispositif (1) comprend un premier dispositif de déviation conçu de telle manière qu'il est possible de définir si des palettes (4) sont transportées depuis la voie de transport principale (5) ou depuis la voie de transport secondaire (6) jusqu'à la zone de prélèvement (8).

5. Dispositif (1) selon la revendication 4, dans lequel le dispositif de commande (14) est conçu pour commander le premier dispositif de déviation de telle manière que, dans un laps de temps prédéterminé, respectivement seules des palettes (4) issues de la voie de transport principale (5) ou seules des palettes (4) issues de la voie de transport secondaire (6) pénètrent dans la zone de prélèvement (8).

6. Dispositif (1) selon l'une quelconque des revendications précédentes, dans lequel la voie de transport secondaire (6) est conçue pour le transport de palettes (4) vers un dispositif de couplage, dans lequel le dispositif de couplage est conçu pour coupler des palettes (4) dans la voie de transport principale (5), en particulier dans la direction de transport (7) avant une entrée de la machine d'impression directe (2).

7. Dispositif (1) selon l'une quelconque des revendications précédentes, dans lequel le dispositif (1) comprend un second dispositif de déviation conçu de telle manière qu'il est possible de définir si des palettes (4) sont transportées à partir d'une ou de la zone de prélèvement (8) vers un ou le dispositif de couplage ou vers une autre zone d'atelier.

8. Dispositif (1) selon l'une quelconque des revendications 4 à 7, dans lequel le premier et/ou le second dispositif de déviation comprend ou comprennent respectivement au moins un aiguillage et/ou au moins un guidage et/ou au moins un verrouillage de palette, par exemple sous la forme d'une butée ou d'une étoile de verrouillage.

9. Dispositif (1) selon l'une quelconque des revendications précédentes, dans lequel le dispositif de découplage (12) comprend le système à poussoir, dans lequel le système à poussoir est conçu pour pousser les palettes (4) depuis une bande transporteuse de la voie de transport principale (5) jusqu'à une bande transporteuse de la voie de transport secondaire (6).

10. Procédé d'exclusion de récipients (3) imprimés de manière défectueuse dans une machine d'impression directe (2),
**caractérisé par** les étapes consistant à :
transporter des palettes de transport (4), conçues pour le transport de récipients et dans lesquelles se trouvent des récipients imprimés, le long d'une voie de transport s'éloignant de la machine d'impression directe (2), dans lequel la voie de transport comprend au moins une voie de transport principale (5) et une voie de transport secondaire (6),
vérifier l'image imprimée sur les récipients (3) et
découpler, de la voie de transport principale (5) vers la voie de transport secondaire (6), des palettes (4) munies de récipients (3) pour lesquels une image imprimée défectueuse a été détectée.

11. Procédé selon la revendication 10, comprenant une étape consistant à acheminer des palettes (4) depuis la voie de transport secondaire (6) et éventuellement depuis la voie de transport principale (5) jusqu'à une zone de prélèvement (8) et en particulier une étape consistant à prélever de manière manuelle et/ou mécanique des récipients (3) à partir des palettes (4) dans la zone de prélèvement (8).

12. Procédé selon la revendication 11, dans lequel, dans un laps de temps prédéterminé, respectivement seules des palettes (4) issues de la voie de transport principale (5) ou de la voie de transport secondaire (6) sont acheminées vers la zone de prélèvement (8).

13. Procédé selon la revendication 11 ou 12, dans lequel des palettes (4) munies de récipients (3) présentant une image imprimée sans défaut sont acheminées vers la zone de prélèvement (8) et des palettes (4) munies de récipients (3) présentant une image imprimée défectueuse sont stockées dans la voie de transport secondaire (6) jusqu'à ce qu'il n'y ait plus de place pour des palettes (4) dans la voie de transport secondaire (6), puis les palettes (4) stockées sont transportées dans la zone de prélèvement (8), à l'exception des palettes (4) issues de la voie de transport principale (5).

14. Procédé selon les revendications 11 à 13, dans lequel des palettes (4) vides issues de la zone de prélèvement (8) sont couplées dans une zone de couplage de la voie de transport principale (5), en particulier dans la direction de transport (7) avant la machine d'impression directe (2).

15. Utilisation de l'un des dispositifs (1) selon les revendications 1 à 9 pour l'un des procédés selon les revendications 10 à 14.
